# EUROPEAN PATENT APPLICATION

(11) **EP 4 685 930 A1**
(43) Date of publication of application: **28.01.2026**
(21) Application number: 24860477.9
(22) Date of filing: 30.08.2024
(51) Int. Cl.: H01M 10/6551, H01M 10/613, H01M 10/647, H01M 50/293, H01M 50/211, H01M 50/249

(54) **BATTERY PACK COMPRISING FLANGE, PARTITION, AND HEATSINK FIN**

(30) Priority: 01.09.2023 KR 20230116156
(71) Applicant: LG Energy Solution, Ltd., Seoul 07335 (KR)
(72) Inventor: CHOI, Wansup, Daejeon 34122 (KR); CHI, Ho June, Daejeon 34122 (KR); AN, Hyunsoo, Daejeon 34122 (KR)
(74) Representative: BCKIP Part mbB
(86) International application number: PCT/KR2024/013087
(87) International publication number: WO 2025/048561

(57) **Abstract**

The present invention provides a structure of a battery pack including: a battery module having a protruding flange with a first fastening surface; a partition having a second fastening surface facing the first fastening surface and fastened to the flange; and a heat sink fin provided between the first fastening surface and the second fastening surface and having a plurality of ridges and a plurality of valleys protruding and recessed in the fastening direction. The heat sink fin may be provided on the first fastening surface or the second fastening surface, or on a heat sink plate provided between the first fastening surface and the second fastening surface.

## Description

### [TECHNICAL FIELD]

This application claims the benefit of priority based on Korean Patent Application No. 10-2023-0116156 filed on September 1, 2023, entire content disclosed in the document of the patent applications is included as a part of this specification.

The present invention provides a structure of a battery pack wherein a plurality of battery modules are isolated by a partition which prevents thermal propagation between modules.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used. In addition, such battery modules may also be integrated in plurality to constitute a battery pack in order to have higher output and larger capacity.

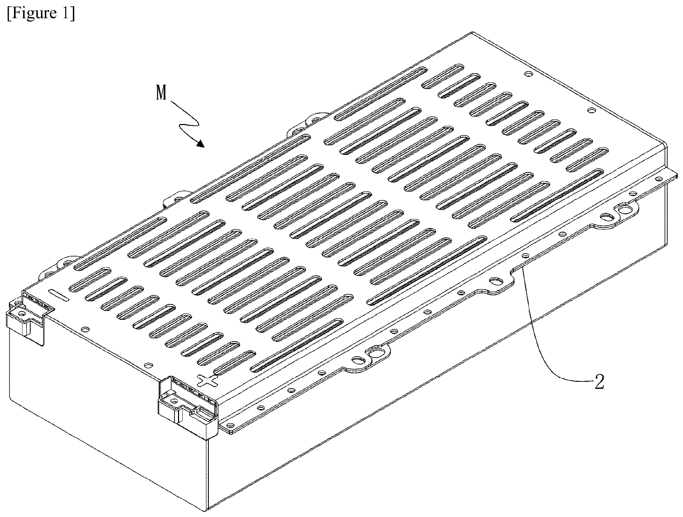

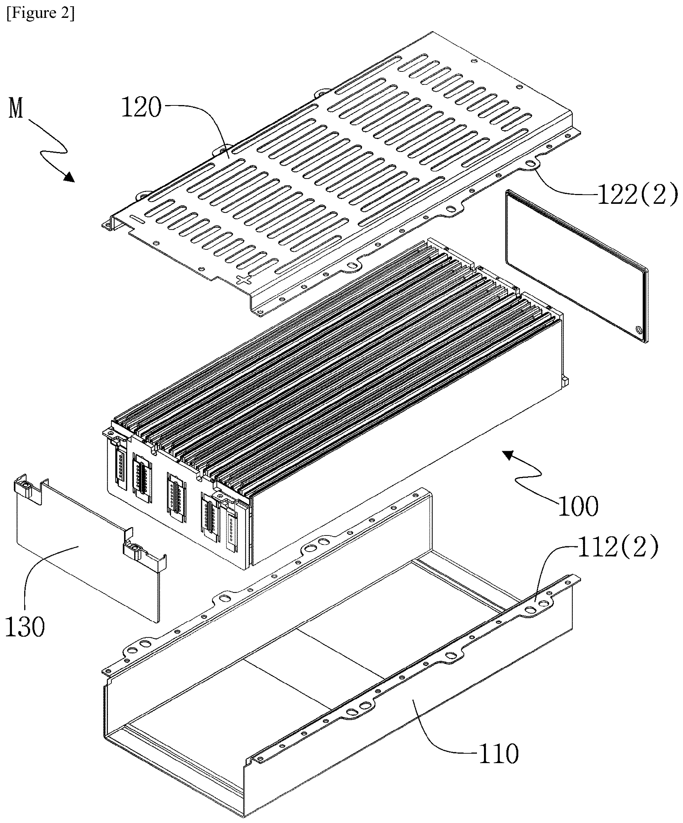

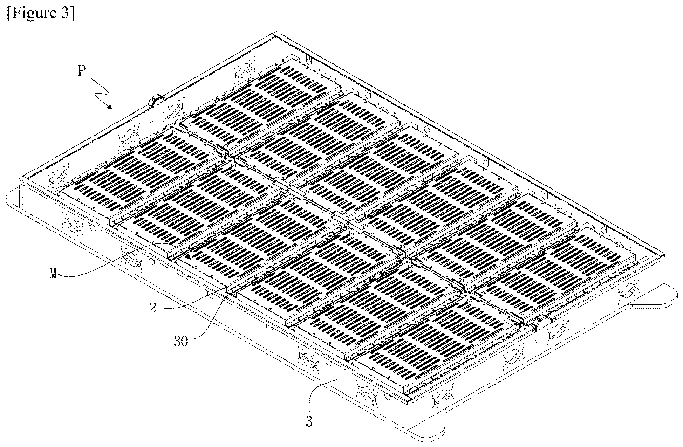

FIGS. 1 and 2 illustrate a structure of a battery module having a flange, and FIG. 3 illustrates a structure of a battery pack. Referring to FIGS. 1 to 3, a battery module M having a flange 2 has a structure in which a cell laminate 100 having a plurality of pouch-type battery cells stacked therein is accommodated in a housing having a flange 2. The flange 2 may include a first flange 112 and a second flange 122 extending in a widthwise direction from a U frame 110 and a top plate 120 constituting the housing, respectively.

The battery pack P is constituted by a plurality of battery modules M placed in a pack frame 3 having a partition 30. The partition 30 isolates spaces in which the battery modules M are placed, and the flange 2 is fastened to the partition 30 so as to fix the battery modules M to the pack frame 3 without movement.

Meanwhile, the cell laminate 100 may ignite due to a short circuit, etc. Here, high-temperature gas and flame generated from the ignited cell laminate 100 may raise the temperature of the housing, and the heat energy resulting therefrom may be transferred to the pack frame 3 and the flange of another battery module through the flange 2 and the partition 30 connected thereto. In such case, there is a risk that thermal propagation may occur between battery modules, causing a serial ignition and thermal runaway at the pack level.

Therefore, a structure capable of firmly fixing the battery module to the pack frame by connecting the flange to the partition while preventing thermal propagation between modules is necessary.

### [DISCLOSURE]

### [TECHNICAL PROBLEM]

In order to solve problems of the above-described prior art, it is an object of the present invention to provide a structure of a battery pack wherein the movement of battery modules within a pack frame is prevented, the spaces for placing the modules are isolated from one another, and thermal propagation between modules due to conduction is prevented.

It is another object of the present invention to provide a structure of a battery pack wherein the dissipation of heat generated from a battery module into air may be facilitated.

It is yet another object of the present invention to provide structure and arrangement of a heat sink fin capable of exhibiting appropriate heat dissipation performance while minimizing deformation due to a fastening load between a flange and a partition.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve above-described technical problems, the present invention provides a structure of a battery pack, including: a battery module having a protruding flange with a first fastening surface; a partition having a second fastening surface facing the first fastening surface and fastened to the flange; and a heat sink fin provided between the first fastening surface and the second fastening surface and having a plurality of ridges and a plurality of valleys protruding and recessed in the fastening direction.

The battery modules may be accommodated in a pack frame to constitute the battery pack. Here, the pack frame may be provided with the partition, and the battery module may be fastened to the pack frame without movement by fastening the flange to the partition.

A plurality of flanges may be connected or joined. For example, the flange may include a first flange and a second flange fastened to the first flange, and the first fastening surface may be provided at the bottom of the first flange. However, the shape and structure of the flange are not limited thereto as long as the flange protrudes from the battery module and has the first fastening surface fastened to the partition.

The partition may divide a space in which the battery module is placed into a plurality of spaces. However, the position and structure of the partition are not limited thereto, and it is sufficient as long as the partition has a second fastening surface to which the flange is fastened.

The flange and the partition may be fastened to each other in a manner that the first fastening surface provided on the flange and the second fastening surface provided on the partition face each other. Hereinafter, the direction in which the first fastening surface and the second fastening surface face each other is referred to as the fastening direction.

The heat sink fin may be provided between the first fastening surface and the second fastening surface. The heat sink fin may be provided separately from the flange and/or the partition, or may be provided connected to the flange and/or the partition.

The heat sink fin may include a material having high thermal conductivity such as metal. It is preferable that the heat sink fin includes a metal material. When the heat sink fin extends from a member, it is preferable that the member also includes a material having high thermal conductivity such as metal.

The heat sink fin may include a plurality of ridges protruding in the fastening direction and valleys protruding in a direction opposite to the protruding direction of the ridges. The ridge may correspond to the front end of the heat sink fin, and the valley may correspond to the base end of the heat sink fin. Accordingly, the heat sink fin may have a shape extending from the valley to the ridge in the fastening direction. The heat sink fin may be in contact with the first fastening surface and/or the second fastening surface at the ridges.

Hereinafter, the structure of the heat sink fin will be described in detail.

### [FIRST EMBODIMENT]

The heat sink fin is provided on the first fastening surface. Here, "the heat sink fin is provided on the first fastening surface" may refer to a structure wherein the heat sink fin is connected to the first fastening surface or the heat sink fin extends from the first fastening surface as a portion of the flange.

The heat sink fin may be manufactured by machining the first fastening surface. For example, the heat sink fin may be manufactured by machining the first fastening surface such that cut portions form the valleys and the remaining portions form the ridges.

Alternatively, the heat sink fin may be manufactured by plastically deforming the first fastening surface. For example, the heat sink fin may be manufactured by plastically deforming the flange made of a metal plate using a press to have unevenness at one or both sides thereof such that grooved portions form the valleys and protruding portion form the ridges.

As the heat sink fin is provided on the flange, the flange may include a material having high thermal conductivity. For example, the flange may include a metal material.

### [SECOND EMBODIMENT]

The heat sink fin may be provided on the second fastening surface. "The heat sink fin is provided on the second fastening surface" may refer to a structure wherein the heat sink fin is connected to the second fastening surface or the heat sink fin extends from the second fastening surface as a portion of the partition.

The heat sink fin may be manufactured by machining the second fastening surface. For example, the heat sink fin may be manufactured by machining the second fastening surface such that cut portions form the valleys and the remaining portions form the ridges.

As the heat sink fin is provided on the partition, the partition may include a material having high thermal conductivity. For example, the partition may include a metal material.

### [THIRD EMBODIMENT]

The battery pack may include a heat sink plate, and the heat sink fin may be provided on a heat sink plate. "Heat sink fin provided between the heat sink plate" refers to a structure wherein or the heat sink fin connected to the heat sink plate or the heat sink fin extends from the heat sink plate as a portion of the heat sink plate.

The heat sink fin may be manufactured by machining the heat sink plate. For example, the heat sink fin may be formed by machining one side or both sides of the heat sink plate such that cut portions form the valleys and the remaining portions form the ridges.

Alternatively, the heat sink fin may be manufactured by plastically deforming the heat sink plate. For example, the heat sink fin may be manufactured by plastically deforming heat sink plate made of a metal plate using a press to have unevenness at one or both sides thereof such that grooved portions form the valleys and protruding portion form the ridges.

As the heat sink fin is provided on the heat sink plate, the heat sink plate may include a material having high thermal conductivity. For example, the partition may include a metal material.

The heat sink plate may be a portion of the partition. Here, the second fastening surface may be provided on the heat sink plate. For example, the partition may include: a heat sink plate including the second fastening surface; and a partition part connected to the heat sink plate and isolating the battery module from an adjacent battery module.

Alternatively, the heat sink plate may be provided as a separate member interposed between the first fastening surface and the second fastening surface.

The heat sink fin may include a first heat sink fin provided between the heat sink plate and the first fastening surface and provided with first ridges and first valleys.

The heat sink fin may include a second heat sink fin provided between the heat sink plate and the second fastening surface and provided with second ridges and second valleys.

The heat sink fin may include the first heat sink fin and the second heat sink fin wherein, along a lengthwise direction, the positions of the first ridges correspond to those of the second ridges, respectively, and the positions of the first valleys correspond to those of the second valleys, respectively.

The heat sink fin may include the first heat sink fin and the second heat sink fin wherein, along a lengthwise direction, the positions of the first ridges correspond to those of the second valleys, respectively, and the positions of the first valleys correspond to those of the second ridges, respectively.

### [ARRANGEMENT OF HEAT SINK FIN]

The flange and the partition may be fastened to each other at a plurality of fastening points 4 arranged along the lengthwise direction. Here, the heat sink fin may be arranged in a manner that the ridges and the valleys are alternately and repeatedly arranged along the lengthwise direction.

It is necessary that the heat sink fin has sufficient rigidity so as not to be deformed by the fastening force between the flange and the partition, and also have a sufficient area exposed to air for heat dissipation.

The heat sink fin may include a first section with the fastening points and a second section without the fastening points along the lengthwise direction. Here, the rigidity of the heat sink fin in the fastening direction may be greater in the first section than in the second section.

The number of ridges per unit length may be greater in the first section than in the second section.

Each ridge may have a predetermined width along the lengthwise direction. Here, the average or total of the widths of the ridges may be larger in the first section than in the second section.

Each of the valleys may have a predetermined width along the lengthwise direction. Here, the average or total of the widths of the valleys may be smaller in the first section than in the second section.

The present invention also provides a structure of a vehicle having the battery pack built therein. The battery pack may be built into the vehicle as a power source. The vehicle may be an electric vehicle or a hybrid vehicle.

### [ADVANTAGEOUS EFFECTS]

The present invention provides a structure of a battery pack in which a battery module is provided with a flange fastened to a partition provided in a pack frame, thereby stably isolating and positioning the battery module without movement, while minimizing conduction of heat generated from the battery module through the flange and the partition.

The present invention also provides a battery pack structure in which the dissipation of heat generated from a battery module into air may be facilitated by heat sink fins having excellent thermal conductivity and having a large contact area with air, thereby preventing heat from being transferred to other battery modules.

The present invention is also advantageous in that the structure of the battery pack may be provided in which the rigidity in the fastening direction is high in a section with fastening points and contact area with air is large in a section without fastening points to provide sufficient heat dissipation performance while minimizing deformation.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIGS. 1 and 2 illustrate a structure of a battery module having a flange.
FIG. 3 illustrates a structure of a battery pack.
FIG. 4 illustrates a flange fastened to a partition.
FIG. 5 illustrates a structure of a battery module according to a first embodiment of the present invention.
FIG. 6 illustrates a cross-section of a flange and a partition according to the first embodiment of the present invention.
FIG. 7 illustrates a structure of a heat sink fin according to the first embodiment of the present invention.
FIG. 8 illustrates a structure of a partition according to a second embodiment of the present invention.
FIG. 9 illustrates a cross-section of a flange and a partition according to the second embodiment of the present invention.
FIGS. 10 and 11 illustrate a coupled structure of a battery module, a heat sink plate and a partition according to a third embodiment of the present invention.
FIGS. 12 and 13 illustrate a structure of a heat sink plate according to the third embodiment of the present invention and a modified example thereof.
FIG. 14 illustrates a cross-section of a flange, a heat sink plate and a partition according to the third embodiment of the present invention.
FIG. 15 illustrates the modified example of the third embodiment of the present invention.
FIGS. 16 to 18 illustrate an arrangement of a heat sink fin according to the present invention.
FIG. 19 illustrates a structure of a vehicle having a battery pack built therein.

### [DESCRIPTION OF REFERENCE NUMERALS]

100: cell laminate
110: U frame
   112: first flange
120: top plate
   122: second flange
130: end plate
2: flange
   24: first fastening surface
3: pack frame
   30: partition
      300: partition part
   34: second fastening surface
4: fastening point
   40: fastening member
5: heat sink plate
50: heat sink fin
   511: (first) ridge
   512: (first) valley
   521: second ridge
   522: second valley
A: first section
B: second section
LA1: ridge width of the first section
LA2: valley width of the first section
LB 1: ridge width of the second section
LB2: valley width of the second section
M: battery module
P: battery pack
V: vehicle
X: longitudinal/forward/backward direction
Y: width direction/left and right direction
Z: height direction/up and down direction/fastening direction

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

Hereinafter, a preferred embodiment of the present invention will be described with reference to the accompanying drawings.

### [STRUCTURES OF BATTERY MODULE AND BATTERY PACK]

First, with reference to FIGS. 1 to 4, the structure of a battery module having a flange and a battery pack including the same will be described in detail.

FIGS. 1 and 2 illustrate a structure of a battery module having a flange. Referring to FIGS. 1 and 2, a battery module M may have a flange 2.

The battery module M may include a cell laminate 100 and a housing accommodating the cell laminate 100. The housing may include: a U frame 110 having open upper end and open front and rear ends; a top plate 120 covering the open upper end of the U frame 110; and an end plate 130 covering the open front and rear ends of the U frame 110.

The flange 2 may protrude outward from the battery module M. The flange 2 may extend from the housing of the battery module M or may be connected to the battery module M as a separate body.

A plurality of flanges 2 may be provided. For example, the flange 2 may include a first flange 112 protruding from two widthwise ends of the U frame 110, and a second flange 122 protruding from two widthwise ends of the top plate 120. The first flange 112 and the second flange 122 may be bonded to each other to form a single flange 2.

FIG. 3 illustrates a structure of a battery pack. Referring to FIG. 3, a plurality of battery modules M may be accommodated in the pack frame 3 to constitute a battery pack P.

The pack frame 3 may be provided with one or more partitions 30 that isolate from each other the spaces where the battery modules M are placed. Individual battery modules M or groups of battery modules M may be placed in the spaces of the pack frame 3 isolated by the partition 30, respectively.

Here, the flange 2 may be fastened to the partition 30. The flange 2 may be directly fastened to the partition 30, or may be indirectly fastened to the partition 30 through other members such as an insulating material or members connected to both the flange 2 and the partition 30.

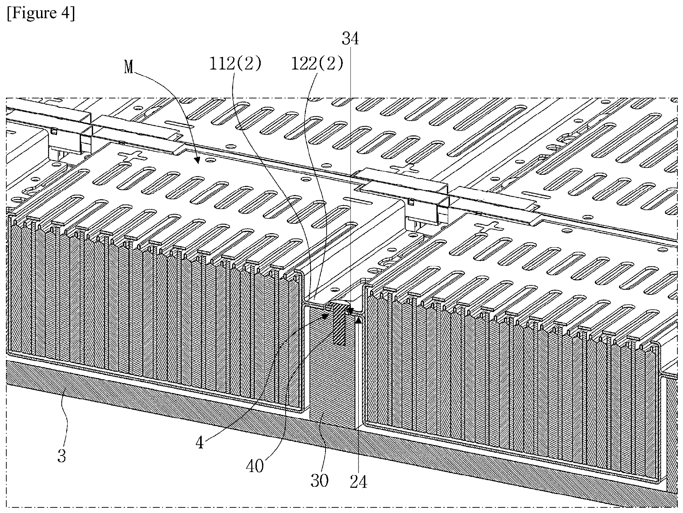

FIG. 4 illustrates the flange fastened to the partition. Referring to FIG. 4, the flange 2 may have a first fastening surface 24 provided at the bottom thereof, and the partition 30 may have a second fastening surface 34 provided at the top thereof. The flange 2 and the partition 30 may be fastened in a fastening direction at a fastening point 4 in a manner that the first fastening surface 24 and the second fastening surface 34 face each other. Herein, for the convenience of description, the heightwise direction is regarded as the fastening direction. However, the fastening direction may any direction as long as the fastening direction is the direction that the first fastening surface 24 and the second fastening surface 34 face each other.

Here, the fastening may be achieved by a fastening member 40 that passes through a fastening hole provided in the flange 2 and the partition 30 at the fastening point 4.

Meanwhile, the battery module M may ignite due to a short circuit of the battery cell, etc. Here, the heat generated from the battery module M may be transferred from the flange 2 to the partition 30 through the fastening point 4, and from the partition 30 to the flange of another battery module and/or the pack frame 3. As the heat energy generated from the battery module M is transferred to another battery module, there is a risk of a serial ignition between modules when thermal runaway occurs in one battery module.

Accordingly, the present invention provides a structure of a battery pack in which a heat sink fin is provided between the first fastening surface 24 and the second fastening surface 34 such that the heat generated from the battery module M may be released without being transferred to the partition 30.

### [FIRST EMBODIMENT]

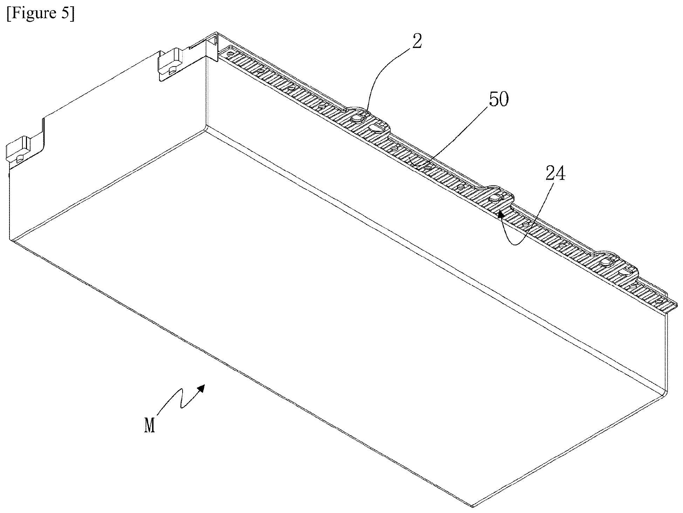

Hereinafter, a structure of a battery pack according to a first embodiment of the present invention will be described in detail with reference to FIGS. 5 to 7. According to first embodiment, the heat sink fin is provided on the flange.

FIG. 5 illustrates a structure of a battery module according to a first embodiment of the present invention. Referring to FIG. 5, the heat sink fin 50 is provided on the first fastening surface 24. Here, "the heat sink fin 50 is provided on the first fastening surface 24" may refer to a structure wherein the heat sink fin 50 extends from the first fastening surface 24 or the heat sink fin 50 is connected to the first fastening surface 24 as a portion of the flange 2.

For example, the heat sink fin 50 may be manufactured by machining or plastically deforming the first fastening surface 24.

It is preferable that the heat sink fin 50 includes a material having high thermal conductivity. For example, the heat sink fin 50 may include a metal material. When the heat sink fin 50 extends from the flange 2, the flange 2 may include a material having high thermal conductivity such as metal.

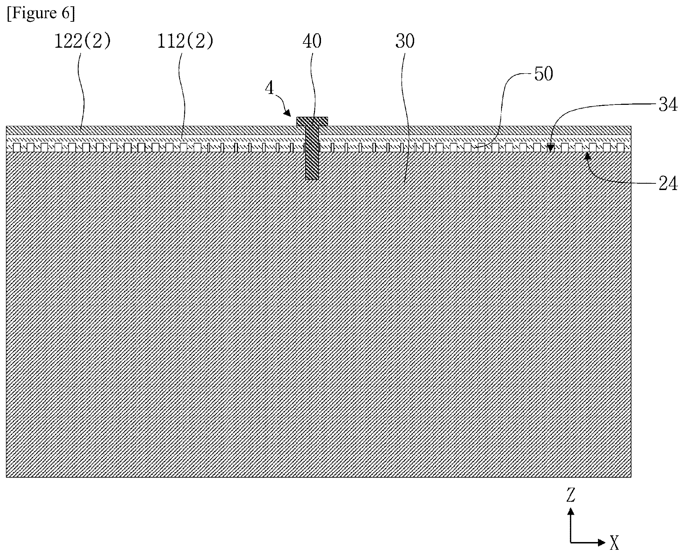

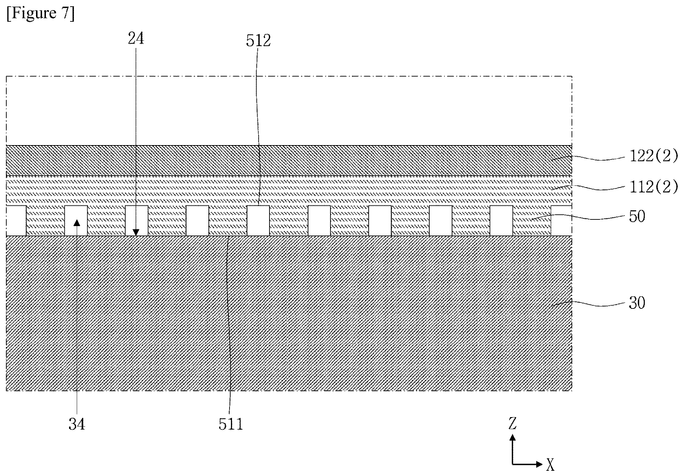

FIG. 6 illustrates a cross-section of the flange and the partition according to the first embodiment of the present invention, and FIG. 7 illustrates a structure of a heat sink fin according to the first embodiment of the present invention. Referring to FIGS. 6 and 7, the heat sink fin 50 may have a plurality of ridges 511 and a plurality of valleys 512 protruding from and recessed into the first fastening surface 24 toward the second fastening surface 34, respectively. The ridge 511 corresponds to the front end of the heat sink fin 50 and may be in contact with the second fastening surface 34.

According to the first embodiment of the present invention, the heat sink fin 50 may be manufactured by machining the first fastening surface 24 of the first flange 112 to have the plurality of ridges 511 and the plurality of valleys 512 protruding from and recessed into the first fastening surface 24 toward the second fastening surface 34, respectively.

According to the first embodiment, the heat transfer path from the flange 2 to the partition 30 may be narrowed by the shape of the heat sink fin 50 as described above.

In addition, according to the first embodiment, the surface of the portion of the heat sink fin 50 extending in the fastening direction for connecting the ridges 511 and the valleys 512 is exposed to air such that the heat absorbed from the flange 2 and the partition 30 may be released into air.

### [SECOND EMBODIMENT]

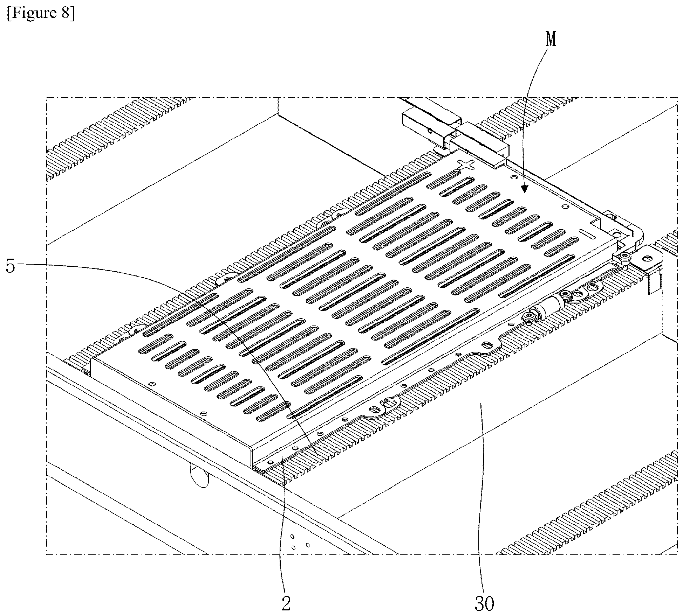

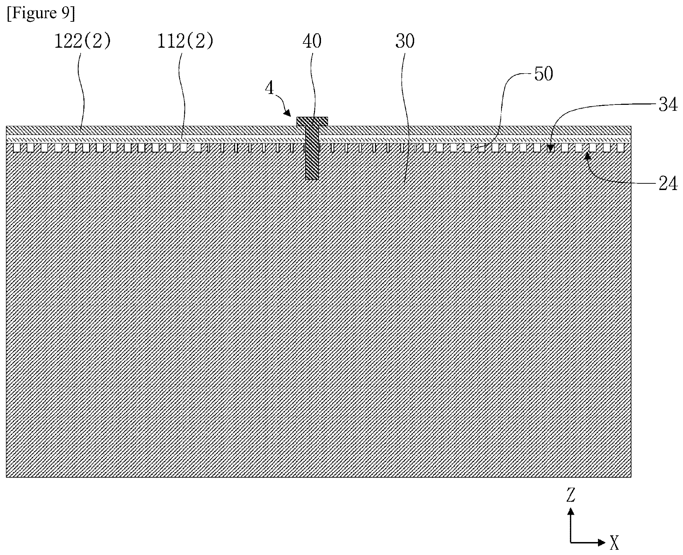

Hereinafter, with reference to FIGS. 8 and 9, a structure of a battery pack according to a second embodiment of the present invention will be described in detail. According to the second embodiment, the heat sink fin is provided on the partition.

FIG. 8 illustrates a structure of a partition according to the second embodiment of the present invention. Referring to FIG. 8, the heat sink fin 50 may be provided on the second fastening surface 34. Here, "the heat sink fin 50 is provided on the second fastening surface 34" may refer to a structure wherein the heat sink fin 50 extends from the second fastening surface 34 or the heat sink fin 50 is connected to the second fastening surface 34 as a portion of the partition 30.

For example, the heat sink fin 50 may be manufactured by machining or plastically deforming the second fastening surface 34.

It is preferable that the heat sink fin 50 includes a material having high thermal conductivity. For example, the heat sink fin 50 may include a metal material. When the heat sink fin 50 extends from the partition 30, the partition 30 may include a material having high thermal conductivity such as metal.

FIG. 9 illustrates a cross-section of the flange and the partition according to the second embodiment of the present invention. Referring to FIG. 9, the heat sink fin 50 may have a plurality of ridges 511 and a plurality of valleys 512 protruding from and recessed into the second fastening surface 34 toward the second fastening surface 34, respectively. The ridge 511 corresponds to the front end of the heat sink fin 50 and may be in contact with the first fastening surface 24.

According to the second embodiment of the present invention, the heat sink fin 50 may be manufactured by machining the second fastening surface 34 of the partition 30 to have the plurality of ridges 511 and the plurality of valleys 512 protruding from and recessed into the second fastening surface 34 toward the first fastening surface 24, respectively.

According to the second embodiment, the heat transfer path from the flange 2 to the partition 30 may be narrowed by the shape of the heat sink fin 50 as described above.

In addition, according to the second embodiment, the surface of the portion of the heat sink fin 50 extending in the fastening direction for connecting the ridges 511 and the valleys 512 is exposed to air such that the heat absorbed from the flange 2 and the partition 30 may be released into air.

### [THIRD EMBODIMENT]

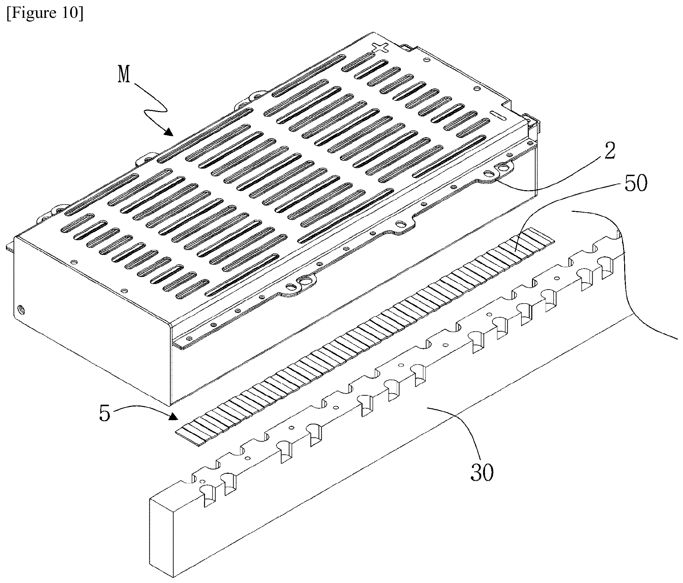

Hereinafter, with reference to FIGS. 10 to 15, a structure of a battery pack according to a third embodiment of the present invention and modified examples thereof will be described in detail. According to the third embodiment and the modified examples thereof, the heat sink fin is provided on a heat sink plate.

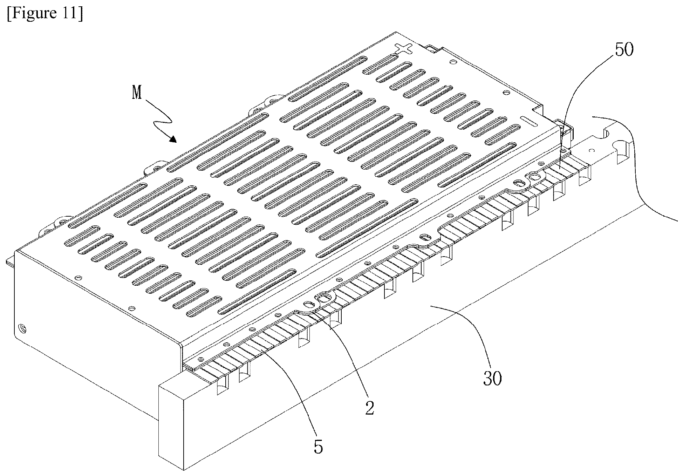

FIGS. 10 and 11 illustrate a coupled structure of a battery module, a heat sink plate and a partition according to the third embodiment of the present invention. Referring to FIGS. 10 and 11, the heat sink fin 50 may be provided on a heat sink plate 5 interposed between the first fastening surface 24 and the second fastening surface 34.

Here, the heat sink plate 5 may be a separate body from the flange 2 and the partition 30, may be connected to the flange 2 and/or the partition 30, or may be a part of the flange 2 and/or the partition 30.

The heat sink fin 50 may include a first heat sink fin provided between the heat sink plate 5 and the first fastening surface 24. Here, "heat sink fin 50 provided between the heat sink plate 5 and the first fastening surface 24" refers to a structure wherein the heat sink fin 50 extends from a surface of the heat sink plate 5 facing the first fastening surface 24 or the heat sink fin 50 connected to a surface of the heat sink plate 5 facing the first fastening surface 24 as a portion of the heat sink plate 5.

The heat sink fin 50 may include a second heat sink fin provided between the heat sink plate 5 and the second fastening surface 34. Here, "heat sink fin 50 provided between the heat sink plate 5 and the second fastening surface 34" refers to a structure wherein the heat sink fin 50 extends from a surface of the heat sink plate 5 facing the second fastening surface 34 or the heat sink fin 50 connected to a surface of the heat sink plate 5 facing the second fastening surface 34 as a portion of the heat sink plate 5.

The heat sink fin 50 may be manufactured by machining or plastically deforming the surface of the heat sink plate 5 facing the first fastening surface 24 and/or the second fastening surface 34.

It is preferable that the heat sink fin 50 includes a material having high thermal conductivity. For example, the heat sink fin 50 may include a metal material. When the heat sink fin 50 extends from the heat sink plate 5, the heat sink plate 5 may include a material having high thermal conductivity such as metal.

According to the third embodiment, the heat sink fin 50 may include, from the heat sink plate 5 made of the metal material, the first heat sink fin extending toward the first fastening surface 24, and the second heat sink fin extending toward the second fastening surface 34.

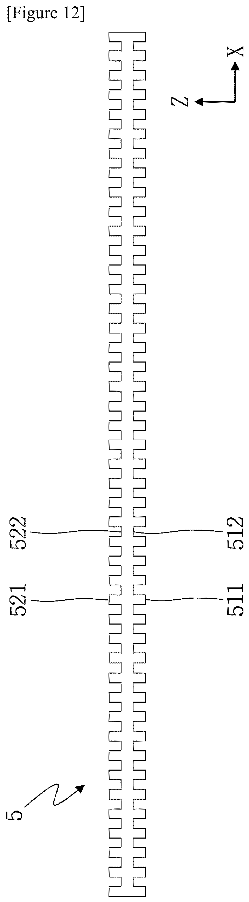

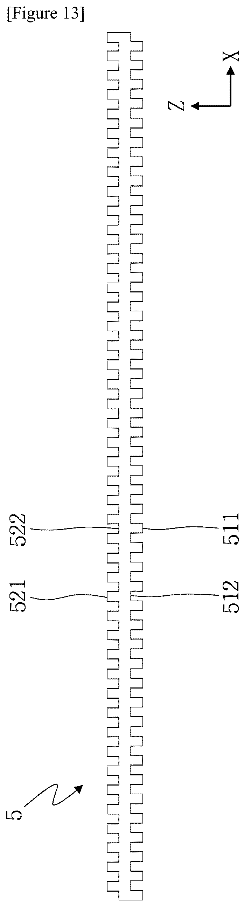

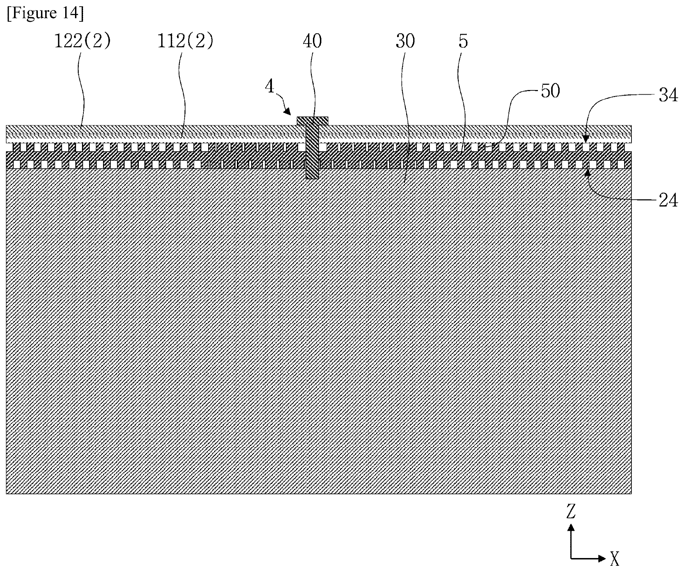

FIGS. 12 and 13 illustrate a structure of a heat sink plate according to the third embodiment of the present invention and a modified example thereof, and FIG. 14 illustrates a cross-section of a flange, a heat sink plate and a partition according to the third embodiment of the present invention. Referring to FIGS. 12 and 13, the first heat sink fin may have a plurality of first ridges 511 and a plurality of first valleys 512 protruding from and recessed into the heat sink plate 5 toward the first fastening surface 24, respectively. The first ridges 511 corresponds to the front end of the first heat sink fin and may be in contact with the first fastening surface 24. In addition, the second heat sink fin may have a plurality of second ridges 521 and a plurality of second valleys 522 protruding from and recessed into the heat sink plate 5 toward the second fastening surface 34. The second ridges 521 corresponds to the front end of the second heat sink fin and may be in contact with the second fastening surface 34.

According the third embodiment of the present invention, the heat sink fin 50 may be arranged, along the lengthwise direction, in a manner that the positions of the first ridges 511 correspond to those of the second valleys 522, respectively, and the positions of the first valleys 512 correspond to those of the second ridges 521, respectively. In such case, the heat transfer path from the flange 2 to the partition 30 becomes longer, which is advantageous for heat dissipation.

According to the modified example, the heat sink fin 50 may be arranged, along the lengthwise direction, in a manner that the positions of the first ridges 511 correspond to those of the second ridges 521, and the positions of the first valleys 512 correspond to those of the second valleys 522, respectively. In such case, it is advantageous in that the rigidity of the heat sink fin 50 in the fastening direction is greater compared to the first heat sink fin and the second heat sink fin being arranged alternately.

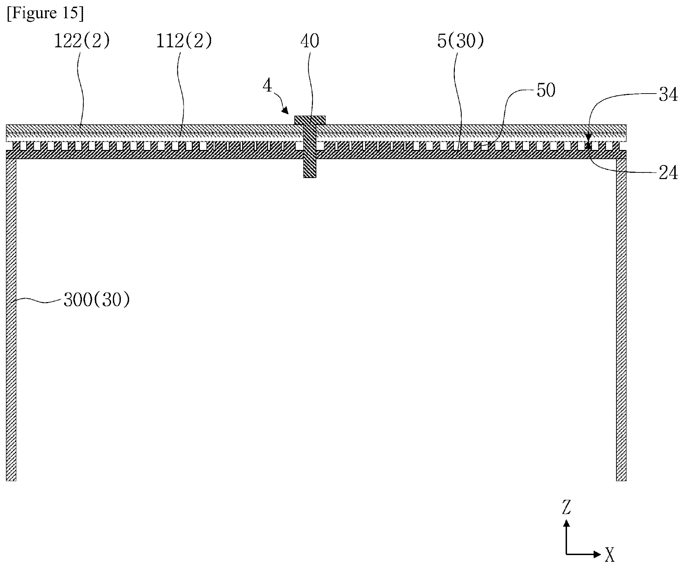

FIG. 15 illustrates the modified example of the third embodiment of the present invention. Referring to FIG. 15, according to the modified example of the third embodiment of the present invention, the heat sink plate 5 may be a portion of the partition 30. Here, the partition 30 may include: a partition part 300 that isolates one battery module M from another battery module; and the heat sink plate 5 connected thereto. Here, the surface of the heat sink plate 5 facing the first fastening surface 24 may correspond to the second fastening surface 34.

According to the modified example, the partition part 300 has a shell shape with an open upper end, and the heat sink plate 5 may cover the upper portion of the partition part 300 as the upper plate of the partition 30. In such case, it is more advantageous in dissipating heat transferred from the flange 2 and the partition 30 since the bottom surface of the heat sink plate 5 is exposed to air.

### [ARRANGEMENT OF HEAT SINK FINS]

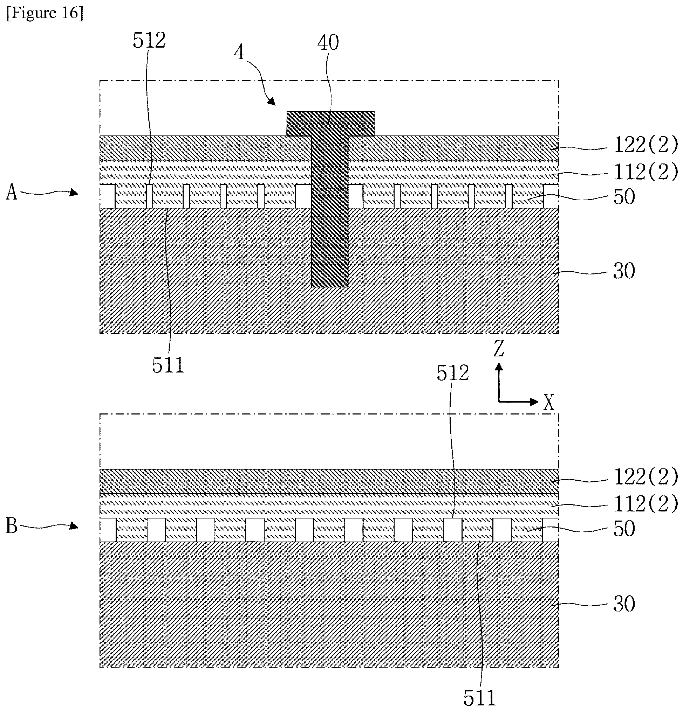

FIGS. 16 to 18 illustrate an arrangement of a heat sink fin according to the present invention.

Hereinafter, the arrangement of heat sink fins according to an embodiment of the present invention will be described in detail with reference to FIGS. 16 to 18. Hereinafter, for the convenience of description, the case where the heat sink fin has the structure according to the first embodiment described above is exemplified. However, the arrangement of the heat sink fin according to the embodiment may be applied to all structures according to the present invention as well as the first to third embodiments described above.

Referring to FIGS. 16 to 18, the flange 2 and the partition 30 may be fastened to each other at a plurality of fastening points 4 arranged along the lengthwise direction. Here, the heat sink fin 50 may be arranged in a manner that the ridges 511 and the valleys 512 are alternately and repeatedly arranged along the lengthwise direction.

In arranging the heat sink fin 50, it is necessary that the heat sink fin 50 has high rigidity at the fastening point 4 so as not to be deformed by the fastening force between the flange 2 and the partition 30. However, when the cross-sectional area of the heat sink fin 50 is increased or the spacing between the heat sink fins is reduced in order to increase the rigidity of the heat sink fin 50 in the fastening direction, the heat dissipation performance of the heat sink fin 50 may be degraded. The present invention provides an arrangement of the heat sink fin 50 delivering appropriate heat dissipation performance without the deformation of the heat sink fin 50.

According to an embodiment of the present invention, the heat sink fin 50 may include a first section A with the fastening points 4 and a second section B without the fastening points 4 along the lengthwise direction. Here, the rigidity of the heat sink fin 50 in the fastening direction may be greater in the first section A than in the second section B.

Referring to FIG. 16, the number of ridges 511 per unit length may be greater in the first section A than in the second section B. Accordingly, at the fastening point 4 and in the adjacent area thereof, the heat sink fin 50 is under greater fastening load between the first fastening surface 24 and the second fastening surface 34 such that the rigidity in the fastening direction is secured, and in the area away from the fastening point 4, heat dissipation performance is secured due to relatively long distance between the heat sink fins 50.

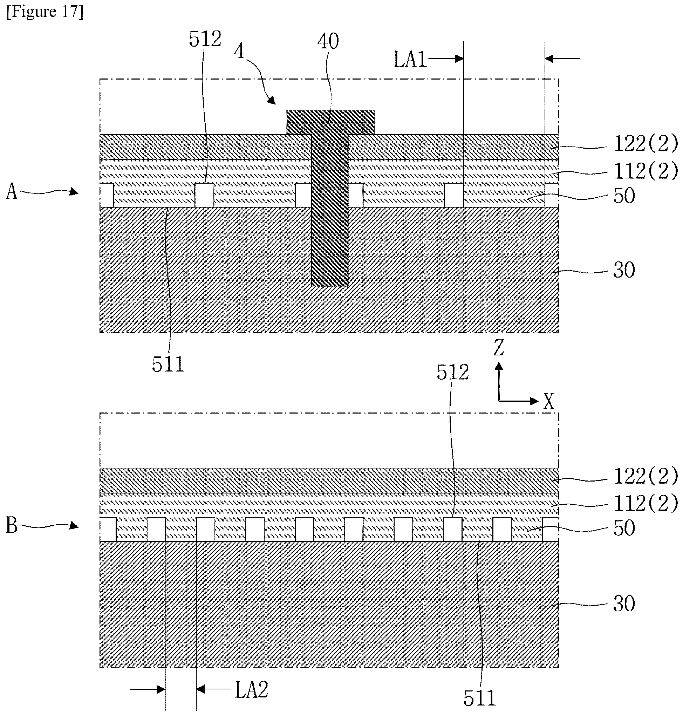

Referring to FIG. 17, each of the ridges 511 may have predetermined ridge widths LA1 and LA2 along the lengthwise direction. Here, the ridges 511 in the first section A may have a predetermined first section ridge width LA1, and the ridges 511 in the second section B may have a predetermined second section ridge width LA2. The average or total of the first section ridge width LA1 may be greater than that of the second section ridge width LA2. Accordingly, at the fastening point 4 and in the adjacent area thereof, the cross-sectional area of each heat sink fin 50 in the fastening direction may be greater such that the rigidity in the fastening direction is secured, and in the area away from the fastening point 4, heat dissipation performance is secured due to relatively small width of the heat sink fins 50.

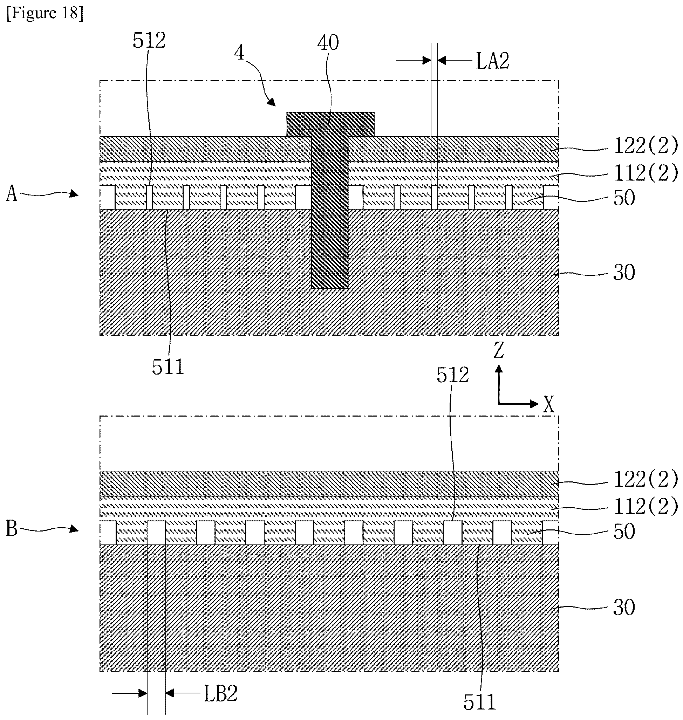

Referring to FIG. 18, each of the valleys 512 may have predetermined valley widths LB1 and LB2 along the lengthwise direction. Here, the valleys 512 in the first section A may have a predetermined first section valley width LB1, and the valleys 512 in the second section B may have a predetermined second section valley width LB2. The average or total of the first section valley width LB1 may be greater than that of the second section valley width LB2. Accordingly, at the fastening point 4 and in the adjacent area thereof, the cross-sectional area of the heat sink fin 50 that is under the fastening load between the first fastening surface 24 and the second fastening surface 34 is greater such that the rigidity thereof in the fastening direction is secured, and in the area away from the fastening point 4, heat dissipation performance is secured due to a relatively large area for heat dissipation.

### [VEHICLE INCLUDING A BATTERY PACK]

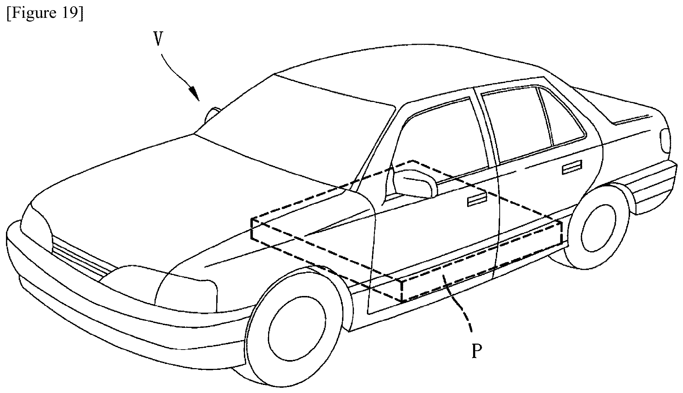

FIG. 19 illustrates a structure of a vehicle having a battery pack built therein. Referring to FIG. 19, the battery pack P may be built into a vehicle V as a power source. The vehicle V may be an electric vehicle or a hybrid vehicle.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack, comprising:
a battery module having a protruding flange with a first fastening surface;
a partition having a second fastening surface facing the first fastening surface and fastened to the flange; and
a heat sink fin provided between the first fastening surface and the second fastening surface, the heat sink fin having a plurality of ridges and a plurality of valleys protruding and recessed in the fastening direction.

2. The battery pack of claim 1, wherein the heat sink fin is provided on the first fastening surface.

3. The battery pack of claim 2, wherein the heat sink fin is manufactured by machining the first fastening surface.

4. The battery pack of claim 2, wherein the heat sink fin is manufactured by plastically deforming the flange.

5. The battery pack of claim 2, wherein the flange comprises a metal material.

6. The battery pack of claim 1, wherein the heat sink fin is provided on a heat sink plate interposed between the first fastening surface and the second fastening surface.

7. The battery pack of claim 6, wherein the heat sink fin is manufactured by machining the heat sink plate.

8. The battery pack of claim 6, wherein the heat sink fin is manufactured by plastically deforming the flange.

9. The battery pack of claim 6, wherein the heat sink plate includes a metal material.

10. The battery pack of claim 6, wherein the heat sink fin is provided between the heat sink plate and the first fastening surface.

11. The battery pack of claim 6, wherein the heat sink fin is provided between the heat sink plate and the second fastening surface.

12. The battery pack of claim 6, wherein the heat sink fin comprises:
a first heat sink fin provided between the heat sink plate and the first fastening surface; and
a second heat sink fin provided between the heat sink plate and the second fastening surface, and
each of the plurality of ridges comprise a first ridge and a second ridge and each of the plurality of valleys comprise a first valley and a second valley wherein the first ridge and the first valley are provided at the first heat sink fin and the second ridge and the second valley are provided at the first heat sink fin.

13. The battery pack of claim 12, wherein, along a lengthwise direction, a position of the first ridge corresponds to that of the second ridge, and a position of the first valley corresponds to that of the second valley.

14. The battery pack of claim 12, wherein, along lengthwise direction, a position of the first ridge corresponds to that of the second valley, and a position of the first valley corresponds to that of the second ridge.

15. The battery pack of claim 1, wherein the flange and the partition are fastened to each other at a plurality of fastening points arranged in a lengthwise direction, and the plurality of ridges and the plurality of valleys are alternately and repeatedly arranged in lengthwise direction.

16. The battery pack of claim 15, wherein the heat sink fin comprises: a first section with a fastening point; and a second section without a fastening point along the lengthwise direction,
and a stiffness of the heat sink fin in fastening direction is greater in the first section than in the second section.

17. The battery pack of claim 16, wherein number of ridges per unit length is greater in the first section than in the second section.

18. The battery pack of claim 16, wherein each of the plurality of ridges has a predetermined width in lengthwise direction,
and an average width of the plurality of ridges is greater in the first section than in the second section.

19. The battery pack of claim 16, wherein each of the plurality of valleys has a predetermined width in lengthwise direction,
and an average width of the plurality of valleys is smaller in the first section than in the second section.

20. The battery pack of claim 16, wherein each of the plurality of ridges has a predetermined width in lengthwise direction,
and a total of widths of the plurality of ridges is greater in the first section than in the second section.

21. The battery pack of claim 16, wherein each of the valleys has a predetermined width in lengthwise direction, and a total of widths of the plurality of valleys is smaller in the first section than in the second section.

22. A battery pack, comprising:
a battery module having a protruding flange with a first fastening surface;
a partition having a second fastening surface facing the first fastening surface and fastened to the flange; and
a heat sink fin provided on the second fastening surface and having a plurality of ridges and a plurality of valleys protruding and recessed in the fastening direction.

23. The battery pack of claim 22, wherein the heat sink fin is manufactured by machining the second fastening surface.

24. The battery pack of claim 22, wherein the heat sink fin is manufactured by plastically deforming the partition.

25. The battery pack of claim 22, wherein the partition comprises a metal material.

26. The battery pack of claim 22, wherein the partition comprises:
a heat sink plate comprising the second fastening surface; and
a partition part connected to the heat sink plate and insulating the battery module from an adjacent battery module.

27. The battery pack of claim 22, wherein the flange and the partition are fastened to each other at a plurality of fastening points arranged in lengthwise direction, and the plurality of ridges and the plurality of valleys are alternately and repeatedly arranged in lengthwise direction.

28. The battery pack of claim 27, wherein the heat sink fin comprises: a first section with fastening point; and a second section without fastening point along lengthwise direction,
and a stiffness of the heat sink fin in fastening direction is greater in the first section than in the second section.

29. The battery pack of claim 28, wherein number of ridges per unit length is greater in the first section than in the second section.

30. The battery pack of claim 28, wherein each of the plurality of ridges has a predetermined width in lengthwise direction,
and an average width of the plurality of ridges is greater in the first section than in the second section.

31. The battery pack of claim 28, wherein each of the plurality of valleys has a predetermined width in lengthwise direction,
and an average width of the plurality of valleys is smaller in the first section than in the second section.

32. The battery pack of claim 28, wherein each of the plurality of ridges has a predetermined width in lengthwise direction,
and a total of widths of the plurality of ridges is greater in the first section than in the second section.

33. The battery pack of claim 28, wherein each of the valleys has a predetermined width in lengthwise direction,
and a total of widths of the plurality of valleys is smaller in the first section than in the second section.
